# EUROPEAN PATENT APPLICATION

(11) **EP 4 760 267 A1**
(43) Date of publication of application: **17.06.2026**
(21) Application number: 24851525.6
(22) Date of filing: 12.07.2024
(51) Int. Cl.: G01N 35/10

(54) **AUTOMATIC ANALYSIS DEVICE AND METHOD FOR CLEANING NOZZLE IN AUTOMATIC ANALYSIS DEVICE**

(30) Priority: 07.08.2023 JP 2023128756
(71) Applicant: HITACHI HIGH-TECH CORPORATION, Tokyo 105-6409 (JP)
(72) Inventor: MATSUOKA Shinya, Tokyo 105-6409 (JP); MATSUO Sumiaki, Tokyo 105-6409 (JP); UMEKI Hiroya, Tokyo 105-6409 (JP)
(74) Representative: MERH-IP Matias Erny Reichl Hoffmann Patentanwälte PartG mbB
(86) International application number: PCT/JP2024/025231
(87) International publication number: WO 2025/033096

(57) **Abstract**

Provided is an automatic analyzer and a method of cleaning a nozzle in an automatic analyzer capable of more effectively cleaning a dispensing portion while reducing contamination caused by splashes as compared with the related art. The automatic analyzer includes: a first cleaning portion 52 configured to discharge first cleaning water from a first direction with respect to a tip of a sample dispensing probe 21; and a second cleaning portion 54 configured to discharge second cleaning water from a second direction opposite to the first direction with the sample dispensing probe 21 interposed therebetween with respect to the tip of the sample dispensing probe 21. A first range where the first cleaning water hits the tip of the sample dispensing probe 21 and a second range where the second cleaning water hits the tip of the sample dispensing probe 21 are shifted in one or both of a vertical direction and a horizontal direction.

## Description

### Technical Field

The present invention relates to an automatic analyzer and a method of cleaning a nozzle in an automatic analyzer.

### Background Art

PTL 1 describes a dilution and dispensing nozzle cleaning container that integrates a dilution cup and a dispensing nozzle cleaning cup, and preferably further includes a container including a common cleaning mechanism for cleaning the dilution cup and cleaning the dispensing nozzle cleaning cup, and further includes a dispensing nozzle in the container, and in which one is selected from the group including a reagent, a substrate, and a sample.

### Citation List

### Patent Literature

PTL 1: JP2019-158451A

### Summary of Invention

### Technical Problem

In the related art, an automatic analyzer that analyzes biological samples such as blood, urine, and various body fluids dispenses a liquid sample such as a sample or a reagent into a reaction container using nozzle-shaped dispensing units. These dispensing units are generally cleaned after use (for example, PTL 1).

In the cleaning, as in PTL 1, there are a method of filling cleaning water in a cup and immersing a tip of a nozzle for cleaning, and a method of performing cleaning by applying the cleaning water to the nozzle in a shower manner in a cleaning tank.

Among the methods, in the method of performing cleaning by applying the cleaning water to the nozzle in the shower manner in the cleaning tank, when the cleaning water discharged from two or more cleaning water discharge nozzles strongly hits the nozzle, splashes may be generated. However, such splashes may cause contamination around the cleaning tank of the device or contamination due to adhesion of water droplets to an upper portion of the nozzle, and there is room for improvement.

The invention provides an automatic analyzer and a method of cleaning a nozzle in an automatic analyzer capable of more effectively cleaning a dispensing portion while reducing contamination caused by splashes as compared with the related art.

### Solution to Problem

The invention includes a plurality of units for solving the above problems, and an example thereof includes: a dispensing mechanism including a nozzle configured to dispense a liquid; a first cleaning portion configured to discharge first cleaning water from a first direction with respect to a tip of the nozzle; and a second cleaning portion configured to discharge second cleaning water from a second direction opposite to the first direction with the nozzle interposed therebetween with respect to the tip of the nozzle. On the tip of the nozzle, a first range where the first cleaning water hits and a second range where the second cleaning water hits are shifted in one or both of a vertical direction and a horizontal direction.

### Advantageous Effects of Invention

According to the invention, it is possible to more effectively clean the dispensing portion while reducing contamination caused by splashes as compared with the related art. Problems, configurations, and effects other than those described above will be clarified by the following description of embodiments.

### Brief Description of Drawings

FIG. 1 is a diagram showing a schematic configuration of an automatic analyzer according to an embodiment.
FIG. 2 is a diagram schematically showing a configuration of a dispensing mechanism of the automatic analyzer according to the embodiment.
FIG. 3 is a side view showing an example of a configuration of a cleaning unit in the automatic analyzer according to the embodiment.
FIG. 4 is a top view showing an example of a configuration of the cleaning unit in the automatic analyzer according to the embodiment.
FIG. 5 is a side view showing another example of the configuration of the cleaning unit in the automatic analyzer according to the embodiment.
FIG. 6 is a top view showing another example of the configuration of the cleaning unit in the automatic analyzer according to the embodiment.
FIG. 7 is a top view showing still another example of the configuration of the cleaning unit in the automatic analyzer according to the embodiment.
FIG. 8 is a side view showing still another example of the configuration of the cleaning unit in the automatic analyzer according to the embodiment.

### Description of Embodiments

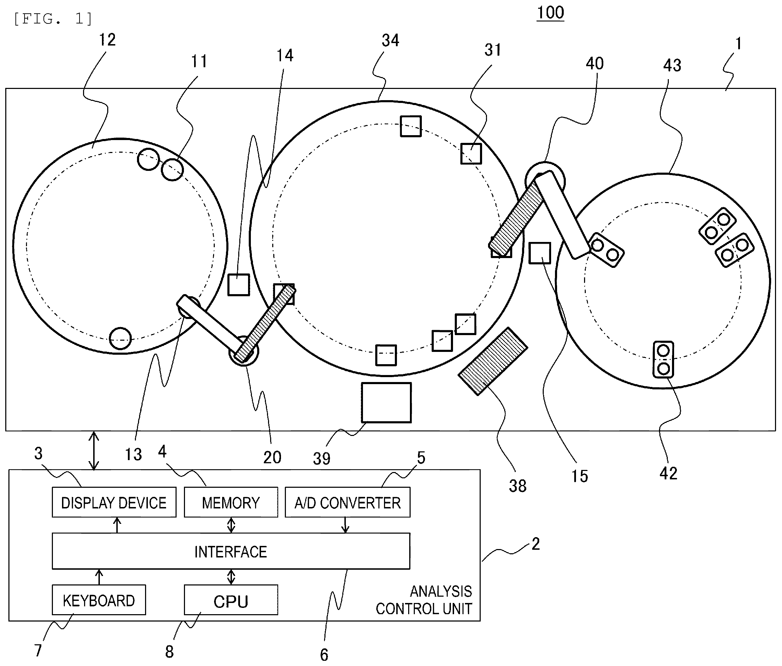

An embodiment of an automatic analyzer and a method of cleaning a nozzle in an automatic analyzer according to the invention will be described with reference to FIGS. 1 to 8. In the drawings used in the present description, the same or corresponding components are denoted by the same or similar reference signs, and repeated descriptions of these components may be omitted.

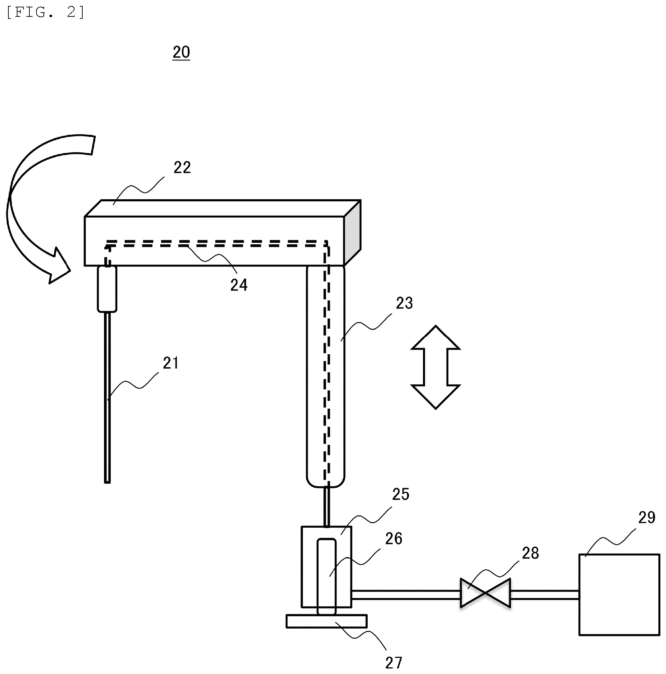

First, a configuration of the automatic analyzer will be described with reference to FIG. 1. FIG. 1 is a plan view schematically showing a configuration of the automatic analyzer, and FIG. 2 is a diagram schematically showing a configuration of a dispensing mechanism.

As shown in FIGS. 1 and 2, an automatic analyzer 100 according to the present embodiment mainly includes an analysis unit 1 that analyzes a liquid sample, and an analysis control unit 2 that controls operation of each mechanism of the analysis unit 1.

Of these units, the analysis unit 1 includes a sample dispensing mechanism 20, a sample holding portion 12, a reaction disk 34, a reagent dispensing mechanism 40, a reagent holding portion 43, a measurement unit 39, a cleaning mechanism 38, and the like.

The sample holding portion 12 has a configuration in which a plurality of sample containers 11, each of which contains a sample to be analyzed in an analysis process, are held in an annular shape. The sample holding portion 12 is rotatable and has a disk shape. The sample holding portion 12 transports, by rotational operation thereof, each of the sample containers 11 to be dispensed to a sample aspiration position 13 of the sample dispensing mechanism 20.

The sample holding portion 12 may be configured such that two sample holding portions 12 can be physically switched for use. The two sample holding portions 12 can be alternately switched, or a sample can be added or replaced halfway via a small window provided in the sample holding portion 12. However, it is not necessary for the user to set up the sample holding portion 12 by himself/herself, and it is also possible to adopt a form in which transportation is performed using a transport mechanism or the like. In addition, the invention is not limited to a disk type in which the sample containers are transported by the rotational operation as shown, and a rack type in which a plurality of sample containers are collectively transported can be used.

The reaction disk 34 holds a plurality of reaction containers 31 for performing a reaction and measurement. This reaction disk 34 is rotatable and has a disk shape. Each of the reaction containers 31 contains a mixed liquid obtained by mixing a sample and a reagent to cause a reaction thereof.

The sample dispensing mechanism 20 aspirates the sample from the sample container 11 transported to the sample aspiration position 13 by the sample holding portion 12. Thereafter, the sample dispensing mechanism 20 dispenses the aspirated sample into one of the reaction containers 31 held by the reaction disk 34.

As shown in FIG. 2, the sample dispensing mechanism 20 includes a sample dispensing probe 21, a dispensing arm 22, and a vertical and rotational operation portion 23.

The sample dispensing probe 21 is attached to one end of the dispensing arm 22, and the dispensing arm 22 is connected to the sample dispensing probe 21 and the vertical and rotational operation portion 23.

The vertical and rotational operation portion 23 has a two-axis movement mechanism of vertical (vertical direction) movement and rotation. The sample dispensing probe 21 can be vertically and rotationally moved by the vertical and rotational operation portion 23. Accordingly, the dispensing mechanism can move to the sample container 11 at the sample aspiration position to aspirate the sample, and can move to a sample discharge position where the reaction container 31 is set to discharge the aspirated sample. In addition, the dispensing mechanism can move to a position of a dispensing mechanism cleaning unit 14 (see FIG. 1) that cleans a tip of the sample dispensing probe 21 with cleaning water or the like. Operation of the vertical and rotational operation portion 23 is controlled by the analysis control unit 2.

A dispensing flow path 24 is a flow path of the dispensing mechanism passing through an inside of the dispensing arm 22 and the vertical and rotational operation portion 23. The sample dispensing probe 21 is connected to a cylinder 25 via the dispensing flow path 24 in the dispensing arm 22. The cylinder 25 includes a plunger 26 and a plunger driving unit 27, and is connected to a water supply pump 29 through a valve 28.

Aspiration operation and discharge operation of the sample dispensing mechanism 20 are executed by vertical operation (reciprocating motion) of the plunger 26 fixed to the cylinder 25. A working fluid (for example, pure water referred to as system water) is filled from the tip of the sample dispensing probe 21 to the cylinder 25 and the water supply pump 29 through the dispensing flow path 24.

The sample dispensing mechanism 20 is not limited to the configuration in which each position is accessed by the rotational operation as shown in the drawing, and may have a configuration in which each position is accessed by linear operation.

The dispensing mechanism cleaning unit 14 is a mechanism for cleaning inner and outer walls of the tip of the sample dispensing probe 21 of the sample dispensing mechanism 20, and includes a first cleaning portion 52 and a second cleaning portion 54 as nozzles for supplying a probe cleaner for cleaning an outer wall of the sample dispensing probe 21, and a flow path for discharging the cleaning water after cleaning the sample dispensing probe 21.

The first cleaning portion 52 discharges first cleaning water from a first direction with respect to the tip of the sample dispensing probe 21, and the second cleaning portion 54 discharges second cleaning water from a second direction opposite to the first direction with the sample dispensing probe 21 interposed therebetween with respect to the tip of the sample dispensing probe 21. Details thereof will be described below.

In addition, a vacuum chamber for vacuum-drying the wet tip of the probe is provided near the dispensing mechanism cleaning unit 14.

The reagent holding portion 43 holds a plurality of reagent containers 42 each containing a reagent to be reacted in the reaction container 31 and used in the analysis process, and includes a reagent disk and a reagent container holding portion (both are omitted for convenience of illustration). The reagent holding portion 43 has a thermal insulation function for improving on-board stability of reagent properties. Each of the reagent containers 42 is filled with a reagent for mixing and reacting with a sample, a reagent, a detergent, or the like necessary for pretreatment of analysis.

In the reagent holding portion 43, in a case of a disk type, the reagent holding portion 43 rotates before reagent dispensing to transport an appropriate reagent container to a reagent aspiration position, and thus the reagent dispensing mechanism 40 can aspirate the reagent necessary for analysis. The reagent containers 42 may include a plurality of different reagent bottles.

The reagent dispensing mechanism 40 is a mechanism that dispenses the reagent or detergent filled in the reagent container 42 into the reaction container 31 held by the reaction disk 34. The reagent dispensing mechanism 40 dispenses the reagent or the detergent at a specified timing in a process including analysis or pretreatment of the analysis, and cleaning. Since a configuration of the reagent dispensing mechanism 40 is substantially the same as that of the sample dispensing mechanism 20, the description thereof will be omitted.

A dispensing mechanism cleaning unit 15 is a mechanism for cleaning inner and outer walls of a tip of a reagent dispensing probe 41 of the reagent dispensing mechanism 40, and since a configuration thereof is substantially the same as that of the dispensing mechanism cleaning unit 14, the description thereof will be omitted.

The measurement unit 39 measures a concentration and the like of a substance to be measured from the mixed liquid of the sample and the reagent during the reaction or after the reaction in the reaction container 31. A measurement method includes a method of measuring transmitted light, a method of measuring an amount of luminescence, and the like, and varies depending on the substance to be measured. The measurement method is not limited, and the number of the measurement method is not limited to one, and may be two or more.

The cleaning mechanism 38 includes a discharge nozzle that discharges the cleaning water and the detergent, an aspiration nozzle that aspirates such as a reaction liquid, and the like. The cleaning mechanism 38 cleans the reaction container 31 with the cleaning water and the detergent.

The analysis control unit 2 is electrically connected to each mechanism of the analysis unit 1, and is a unit that controls the operation of each mechanism of the analysis unit 1 including the sample dispensing mechanism 20. The analysis control unit 2 can be implemented by, for example, a computer including a display device 3 implemented by a liquid crystal display or the like, a memory 4 implemented by a hard disk memory or an external memory, an A/D converter 5, an interface 6, an input device such as a keyboard 7, and an CPU 8, and may be implemented by another computer as a single computer, and is not particularly limited.

The CPU 8 sends a command to the analysis control unit 2 and the like to control the operation of each mechanism. A/D-converted data (photometric value) obtained from the analysis unit 1 via the A/D converter 5 is taken into the CPU 8. The CPU 8 performs an arithmetic process using the taken data (photometric value). That is, the CPU 8 can control each mechanism of the analysis unit 1 via the analysis control unit 2, and can perform the arithmetic process of data.

The memory 4 as a recording device and the keyboard 7 for inputting operation commands and the like are connected to the interface 6. The memory 4 records information such as analysis parameters, analysis item requests, a calibration result, and an analysis result.

The operation of each device is controlled by the analysis control unit 2 based on various programs recorded in a storage device. Operation control processes to be executed by the analysis control unit 2 may be integrated in one program, or may be separated into multiple programs, or may be a combination thereof. A part or all of the programs may be implemented by dedicated hardware or may be modularized.

The display device 3 includes a user interface such as a touch panel display, and outputs information to a user and receives various inputs from the user.

The above is the configuration of the automatic analyzer 100 of the present embodiment.

In such the automatic analyzer 100, color development, luminescence, and the like caused by a reaction between a target component in the sample and the reagent are measured by the measurement unit 39, and a concentration of the target component in the sample is calculated by the arithmetic process of the analysis control unit 2.

Further, the configuration of the automatic analyzer 100 is not limited to a form of a single analysis module configuration as shown in Fig. 1, and may be configured such that two or more analysis modules capable of measuring various same or different analysis items or pretreatment modules for performing pretreatment are connected by a transportation device.

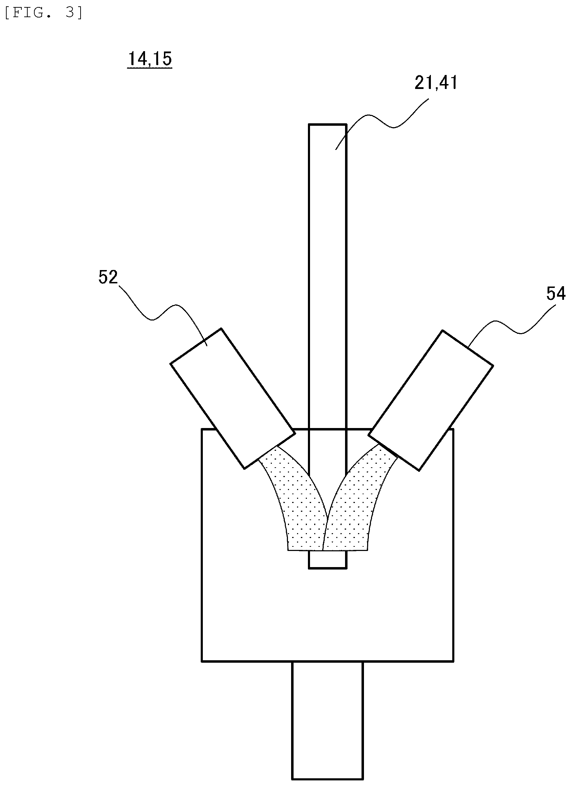

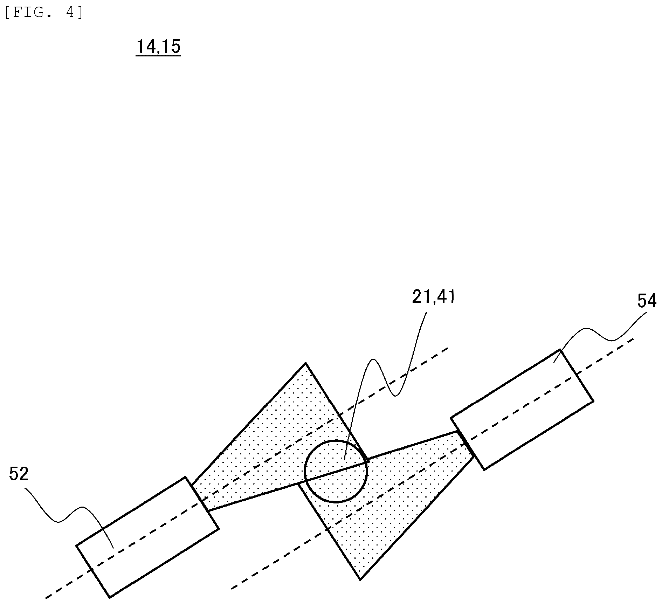

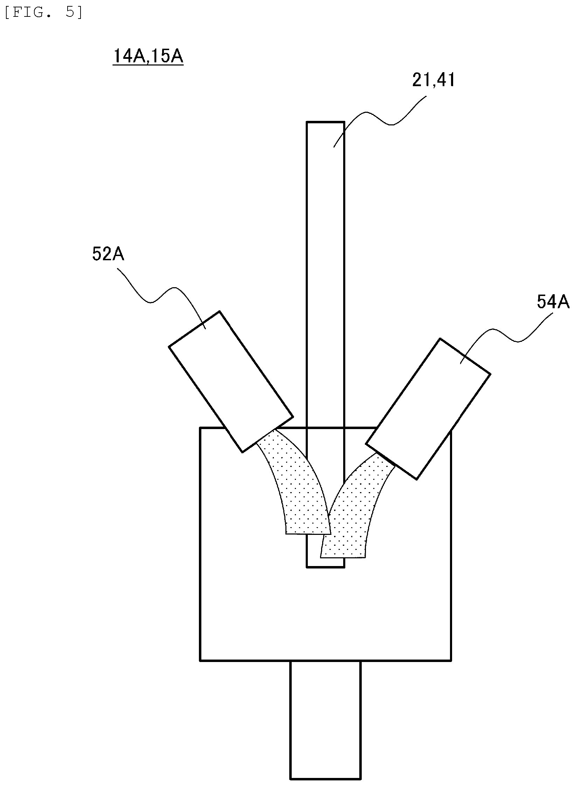

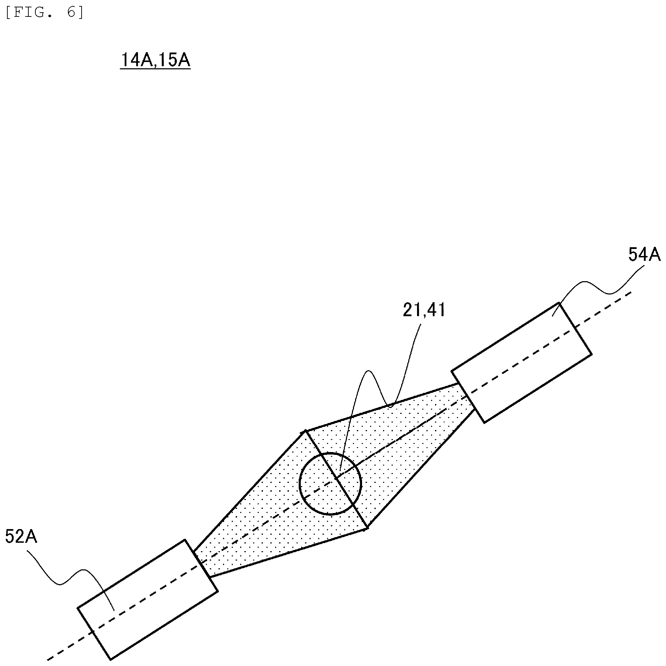

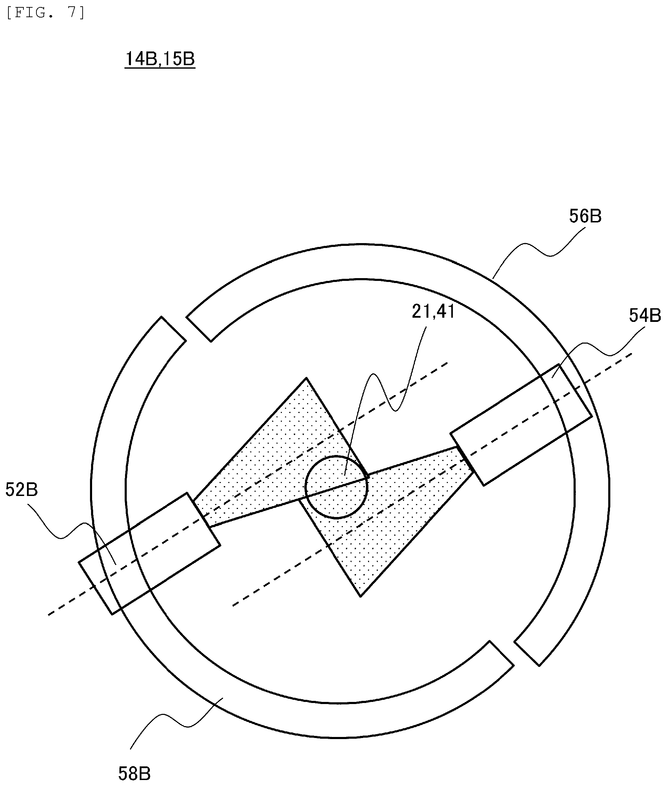

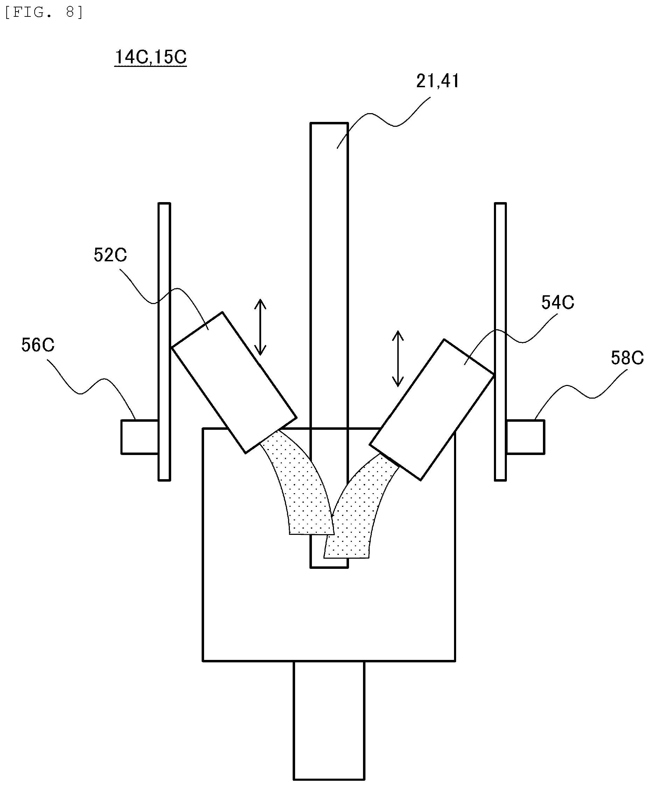

Next, a characteristic configuration and operation of the present embodiment will be described with reference to FIG. 3 and subsequent drawings. FIG. 3 is a side view showing an example of the configuration of the cleaning unit in the automatic analyzer of the embodiment, FIG. 4 is a top view showing an example of the configuration of the cleaning unit in the automatic analyzer of the embodiment, FIG. 5 is a side view showing another example of the configuration of the cleaning unit, FIG. 6 is a top view showing another example of the configuration of the cleaning unit, FIG. 7 is a top view showing still another example of the configuration of the cleaning unit, and FIG. 8 is a side view showing still another example of the configuration of the cleaning unit.

In the following description, a structure of the dispensing mechanism cleaning unit 14 that cleans the sample dispensing probe 21 will be described as an example, and the detailed description of the dispensing mechanism cleaning unit 15 having substantially the same configuration except for a cleaning target will be omitted.

As shown in FIG. 3, the first cleaning portion 52 and the second cleaning portion 54 provided in the dispensing mechanism cleaning unit 14 have the same vertical position in a first range where the first cleaning water hits the tip of the sample dispensing probe 21 and a second range where the second cleaning water hits the tip of the sample dispensing probe 21, but as shown in FIG. 4, the first range and the second range are shifted in the horizontal direction at the tip of the sample dispensing probe 21.

Here, in FIGS. 3 and 4, horizontal positions of one or both of the first cleaning portion 52 and the second cleaning portion 54 may be fixed to an inner wall of the dispensing mechanism cleaning unit 14, but the horizontal positions can be configured to be movable periodically (for example, once a month or the like) or irregularly assuming that the fixing is performed by a bolt, a nut, or the like.

In this case, a movable amount is not particularly limited as long as the first range where the first cleaning water hits the tip of the sample dispensing probe 21 and the second range are shifted in the horizontal direction, but a positional relationship is required in which the second cleaning portion 54 discharges the second cleaning water from the second direction opposite to the first direction with the sample dispensing probe 21 interposed therebetween with respect to the tip of the sample dispensing probe 21, and thus it is desirable that the second cleaning portion 54 have the same movement amount.

The sample dispensing probe 21 can also be moved upward or downward in the vertical direction, and in a case of moving the sample dispensing probe 21, the movement may be either during the discharge of the cleaning water or during a stop of the discharge, and is not particularly limited.

As another form, as shown in FIG. 6, a first cleaning portion 52A and a second cleaning portion 54A provided in each of dispensing mechanism cleaning units 14A and 15A have the same horizontal position in the first range where the first cleaning water hits the tip of the sample dispensing probe 21 and the second range where the second cleaning water hits the tip of the sample dispensing probe 21, but as shown in FIG. 5, the first range and the second range are shifted in the vertical direction at the tip of the sample dispensing probe 21.

Similarly to the first cleaning portion 52 and the second cleaning portion 54, vertical positions of one or both of the first cleaning portion 52A and the second cleaning portion 54A may be fixed to an inner wall of the dispensing mechanism cleaning unit 14A, but a vertical height position can be configured to be movable periodically (for example, once a month or the like) or irregularly assuming that the fixing is performed by a bolt, a nut, or the like.

Further, as shown in FIG. 7, a first cleaning portion drive mechanism 56B that moves a horizontal position of a first cleaning portion 52B provided in each of the dispensing mechanism cleaning units 14B and 15B and a second cleaning portion drive mechanism 58B that moves a horizontal position of a second cleaning portion 54B can be further provided. Neither the first cleaning portion drive mechanism 56B nor the second cleaning portion drive mechanism 58B is essential, and either one may be provided.

The first cleaning portion drive mechanism 56B and the second cleaning portion drive mechanism 58B can move the first cleaning portion 52B and the second cleaning portion 54B so as to circle around the sample dispensing probe 21, but are not limited to the movement in a circumferential direction, and may be configured to move the first cleaning portion 52B and the second cleaning portion 54B in a radial direction of the sample dispensing probe 21.

In the case of using the first cleaning portion drive mechanism 56B and the second cleaning portion drive mechanism 58B, when the cleaning water is discharged even during the movement, it is desirable to adjust configurations and a positional relationship of the movement mechanisms or to adjust parameters of the movement mechanisms such that a state in which the first range where the first cleaning water hits the tip of the sample dispensing probe 21 and the second range are shifted in the horizontal direction is maintained, but it is desirable that a relative positional relationship thereof is offset, that is, the relative positional relationship is fixed.

When the cleaning water is not discharged during the movement, the first range where the first cleaning water hits the tip of the sample dispensing probe 21 and the second range after the movement may be shifted only in the horizontal direction.

In addition, as shown in FIG. 8, a first cleaning portion drive mechanism 56C that moves a vertical position of a first cleaning portion 52C provided in each of dispensing mechanism cleaning units 14C and 15C and a second cleaning portion drive mechanism 58C that moves a vertical position of a second cleaning portion 54C can be further provided. As well in this case, neither the first cleaning portion drive mechanism 56C nor the second cleaning portion drive mechanism 58C is essential, and either one may be provided.

Further, both of a drive mechanism that moves the horizontal position and the vertical height position of the first cleaning portion and a drive mechanism that moves the horizontal position and the vertical height position of the second cleaning portion may be provided.

As described above, in a method of cleaning the nozzle in the automatic analyzer 100 of the present embodiment, the cleaning is performed with the first range where the first cleaning water discharged from the first direction hits each of the tips of the sample dispensing probe 21 and the reagent dispensing probe 41 and the second range where the second cleaning water discharged from the second direction opposite to the first direction hits each of the tips of the sample dispensing probe 21 and the reagent dispensing probe 41 with the sample dispensing probe 21 and the reagent dispensing probe 41 interposed therebetween being shifted in one or both of the vertical direction and the horizontal direction.

Next, effects of the present embodiment will be described.

The automatic analyzer 100 of the present embodiment described above includes the sample dispensing mechanism 20 and the reagent dispensing mechanism 40 respectively including the sample dispensing probe 21 and the reagent dispensing probe 41 each of which dispenses a liquid, the first cleaning portion 52, 52A, 52B, or 52C that discharges the first cleaning water with respect to each of the tips of the sample dispensing probe 21 and the reagent dispensing probe 41 from the first direction, and the second cleaning portion 54, 54A, 54B, or 54C that discharges the second cleaning water with respect to each of the tips of the sample dispensing probe 21 and the reagent dispensing probe 41 from the second direction opposite to the first direction with the sample dispensing probe 21 and the reagent dispensing probe 41 interposed therebetween, and the first range where the first cleaning water hits each of the tips of the sample dispensing probe 21 and the reagent dispensing probe 41 and the second range where the second cleaning water hits each of the tips of the sample dispensing probe 21 and the reagent dispensing probe 41 are shifted in one or both of the vertical direction and the horizontal direction.

Accordingly, when cleaning power is obtained by applying the cleaning water with respect to the tips of the sample dispensing probe 21 and the reagent dispensing probe 41 in a shower manner, it is possible to prevent scattering of splashes as compared with the related art by preventing direct hitting at portions where water forces of the discharged water from the first cleaning portion 52, 52A, 52B, or 52C and the second cleaning portion 54, 54A, 54B, or 54C are strong, and to prevent contamination around a cleaning tank of the device caused by the splashes and contamination due to adhesion of water droplets to an upper portion of the nozzle.

In addition, since one or both of the first cleaning portion 52A or 52C and the second cleaning portion 54A or 54C are configured such that the vertical height positions thereof are movable, or one or both of the first cleaning portion 52 or 52B and the second cleaning portion 54 or 54B are configured such that the horizontal positions thereof are movable, it is possible to eliminate a possibility that cleaning efficiency slightly changes depending on a side surface of the nozzle due to uneven hit of the cleaning water, and to eliminate a possibility of a long-term influence.

Further, by further providing the first cleaning portion drive mechanism 56B or 56C and the second cleaning portion drive mechanism 58B or 58C that move the vertical position and/or the horizontal position of one or both of the first cleaning portion 52B or 52C and the second cleaning portion 54B or 54C, a cleaning range can be automatically changed even during the cleaning or the like, and thus a cleaning tank with higher cleaning efficiency can be implemented.

### <Others>

The invention is not limited to the embodiment described above, and various modifications and applications are possible. The embodiment described above is described in detail for easy understanding of the invention, and is not necessarily limited to those having all the configurations described above.

### Reference Signs List

- 1:: analysis unit
- 2:: analysis control unit
- 3:: display device
- 4:: memory
- 5:: A/D converter
- 6:: interface
- 7:: keyboard
- 8:: CPU
- 11:: sample container
- 12:: sample holding portion
- 13:: sample aspiration position
- 14, 14A, 14B, 14C, 15, 15A, 15B, 15C:: dispensing mechanism cleaning unit
- 20:: sample dispensing mechanism
- 21:: sample dispensing probe (nozzle)
- 22:: dispensing arm
- 23:: vertical and rotational operation portion
- 24:: dispensing flow path
- 25:: cylinder
- 26:: plunger
- 27:: plunger driving unit
- 28:: valve
- 29:: water supply pump
- 31:: reaction container
- 34:: reaction disk
- 38:: cleaning mechanism
- 39:: measurement unit
- 40:: reagent dispensing mechanism
- 41:: reagent dispensing probe (nozzle)
- 42:: reagent container
- 43:: reagent holding portion
- 52, 52A, 52B, 52C:: first cleaning portion
- 54, 54A, 54B, 54C:: second cleaning portion
- 56B, 56C:: first cleaning portion drive mechanism
- 58B, 58C:: second cleaning portion drive mechanism
- 100:: automatic analyzer

## Claims

1. An automatic analyzer comprising:
a dispensing mechanism including a nozzle configured to dispense a liquid;
a first cleaning portion configured to discharge first cleaning water from a first direction with respect to a tip of the nozzle; and
a second cleaning portion configured to discharge second cleaning water from a second direction opposite to the first direction with the nozzle interposed therebetween with respect to the tip of the nozzle, wherein
a first range where the first cleaning water hits the tip of the nozzle and a second range where the second cleaning water hits the tip of the nozzle are shifted in one or both of a vertical direction and a horizontal direction.

2. The automatic analyzer according to claim 1, wherein
one or both of the first cleaning portion and the second cleaning portion has movable a vertical height position.

3. The automatic analyzer according to claim 1, wherein
one or both of the first cleaning portion and the second cleaning portion has a movable horizontal position.

4. The automatic analyzer according to claim 1, further comprising:
a drive unit configured to move a vertical position and/or a horizontal position of one or both of the first cleaning portion and the second cleaning portion.

5. A method of cleaning a nozzle in an automatic analyzer, comprising:
shifting, in one or both of a vertical direction and a horizontal direction, a first range where first cleaning water discharged from a first direction hits a tip of the nozzle and a second range where second cleaning water discharged from a second direction opposite to the first direction with the nozzle interposed therebetween hits the tip of the nozzle.
